# EUROPEAN PATENT SPECIFICATION

(11) **EP 1 938 716 B1**
(45) Date of publication and mention of the grant of the patent: **02.12.2009**
(21) Application number: 05790466.6
(22) Date of filing: 30.09.2005
(51) Int. Cl.: A47J 27/00, B65D 81/34, A23L 1/16

(54) **SYSTEM CONTAINER FOR COOKING PASTA BY ELECTRONIC OVEN**
SYSTEMBEHÄLTER ZUM GAREN VON NUDELN MIT EINEM ELEKTRONISCHEN OFEN
SYSTEME DE RECIPIENT POUR CUISSON DE PATES DANS UN FOUR ELECTRIQUE

(43) Date of publication of application: 02.07.2008
(73) Proprietor: News Chef, Inc., Tokyo 105-0001 (JP)
(72) Inventor: OHYAMA, Yoshio, Minato-ku, Tokyo 107-0052 (JP)
(74) Representative: Van Straaten, Joop
(86) International application number: PCT/JP2005/018575
(87) International publication number: WO 2007/043154

(56) References cited:
- EP-A- 1 464 262
- EP-A- 1 563 776
- DE-U1-202005 011 136
- JP-A- 2004 131 120
- JP-A- 2004 305 716
- JP-A- 2005 058 100
- JP-A- 2005 119 684
- JP-A- 2005 162 289
- JP-U- 63 013 877
- US-A- 5 057 331

## Description

### FIELD OF THE INVENTION

The present invention relates to a pasta cooking system for a microwave oven, and more specifically to a container which is capable of cooking an authentic pasta, such as spaghetti and macaroni, from its rehydratable condition simply with a microwave oven.

### BACKGROUND ART

The usual way to cook pasta is to boil water of at least ten times the weight of pasta in a pasta cooking pan, put salt, oil, and pasta into it, cook pasta with stirring, then swiftly drain water from pasta, and combine it with separately cooked pasta sauce.

In the process above, it is necessary to monitor and attend to various factors, such as the amount of water, the condition of boiling water, cooking time, swift draining, and so on. Pasta with ideal flavor and texture can be achieved only when all such conditions are met.

With the object to simplify the steps to cook pasta, a number of heat-resistant plastic containers are proposed which are capable of cooking pasta simply with a microwave oven.

Unexamined Japanese Patent Publications No. 299052/1997 and No. 131120/2004, for example, disclose a heat-resistant hermetic plastic container which can be microwaved with frozen or vacuum-packed pasta and sauce therein. Fast-food pasta of this kind becomes popular for its convenience in that frozen or vacuum-packed cooked pasta can be readily reheated.

On the other hand, Japanese Utility Model Publication No. 15203/1996 discloses a microwavable container with rehydratable pasta therein. In this invention, the container has walls extending from a bottom surface at an angle of 70 degree or less, the bottom surface configured so that the ratio of height and dimension thereof ranges from 0.01 to 0.05cm⁻¹, and a lid smaller than the open end of the container, having the lid raised with boiling of water and move on foams therein.

Although fast-food pasta disclosed in said Unexamined Japanese Patent Publications is easy to cook and convenient, it leaves a problem in texture, because the surface of pasta tends to be dried due to evaporation or absorption of moisture by pasta itself and because microwave ovens tend to heat foodstuffs unevenly.

In the microwavable container disclosed in said Japanese Utility Model Publication, on the other hand, pasta is cooked with less water and in a smaller container than the conventional method using a pan and gas. Accordingly, it is not subjected to the convection in boiling water and therefore tends to stick to each other.

Further, it also has deficiencies in that the lid is often dislocated from the container due to steam pressure and the water mixed with starch dissolved from pasta is boiled out from the container and mess up inside the microwave oven.

These pastas cooked with conventional microwavable containers are inferior in taste and texture than those cooked by conventional means, and in fact it is very difficult to serve an authentic pasta solely with a microwave oven.

In European Patent Application EP-A-1 563 776 a pasta cooking system having the features of the preamble of claims 1 and 2 is disclosed. The above cited problems occur in these prior art too.

In the context of the above, an object of the present invention is to provide a pasta cooking system for a microwave oven which is capable of cooking, only with a microwave oven, rehydratable pasta such as spaghetti and macaroni, with flavor and texture equivalent to those cooked with pasta pans (including autoclaves) and gas and in a good amount of boiling water, and more specifically, which is capable of cooking pasta with good texture by preventing water from spilling out from the container when it reached boiling point and keeping pasta from sticking to each other.

### DISCLOSURE OF THE INVENTION

The present invention overcomes the above problems by providing, firstly, a pasta cooking system for a microwave oven comprising a container body having a fitting section around an upper rim, a lid having a bottom fitting section around a bottom rim and a depression on its top surface comprising an opening, an upper fitting section, and a steam-releasing groove, a cap having a fitting section on its peripheral wall;
a pasta holder being encased inside said container body, said fitting section of the container body and said bottom fitting section of the lid being engaged together, said upper fitting section of the lid and said cap fitting section being engaged together, said opening and said steam-releasing groove of the lid and/or a gap between said fitting section of the container body and said bottom fitting section of the lid providing a path for air and steam within the container, characterized in that said pasta holder has a series of raised ridges and drain holes on the bottom surface
and secondly, a pasta cooking system for a microwave oven comprising:
a container body having a fitting section around an upper rim, a pasta holder having a series of raised ridges and drain holes on the bottom surface;
a lid having a bottom fitting section around a bottom rim and a depression on its top surface comprising an opening and an upper fitting section;
a cap having a fitting section and a steam-releasing groove on its peripheral wall;
a pasta holder being encased inside said container body, said fitting section of the container body and said bottom fitting section of the lid being engaged together, said upper fitting section of the lid and said fitting section of the cap being engaged together, said opening and said steam-releasing groove of the cap and/or a gap between said fitting section of the container body and said bottom fitting section of the lid providing a path for air and steam within the container, characterized in that said pasta holder having a series of raised ridges and drain holes on the bottom surface.

Further, a sauce tray for placing and cooking pasta sauce and/or foodstuffs can be placed on said pasta holder.

### BRIEF DESCRIPTION OF DRAWINGS

Figure 1 is an exploded perspective view of the first embodiment of the pasta cooking system for a microwave oven.
Figure 2 is a sectional view of the first embodiment of the pasta cooking system in which five components are set apart.
Figure 3 is an enlarged sectional view of an example of irregularities on the bottom surface of the pasta holder.
Figure 4 (a) is a schematic of the pasta cooking system used as a unit, while (b) and (c) are enlarged sectional views of the sections A and B in Figure 4 (a).
Figure 5(a) is an enlarged sectional view of the cap of the first embodiment of the pasta cooking system in the pressed-up position, Figure 5(b) is the same in the closed position, while Figure 5(c) is an enlarged sectional view of the lid in the pressed-up position, and Figure 5 (d) is the same in the closed position.
Figure 6(a) is an enlarged sectional view of the steam-releasing groove of the first embodiment of the pasta cooking system with the cap in the pressed-up position, and
Figure 6(b) is the same in the closed position.
Figure 7 is an exploded perspective view of the second embodiment of the pasta cooking system for a microwave oven.
Figure 8 is a sectional view of the second embodiment of the pasta cooking system in which five components are set apart.
Figure 9 is an exploded perspective view of an embodiment of the pasta cooking system of this invention.
Figure 10 illustrates cooking steps in the embodiment using the pasta cooking system of this invention.

### PREFERRED EMBODIMENT OF THE INVENTION

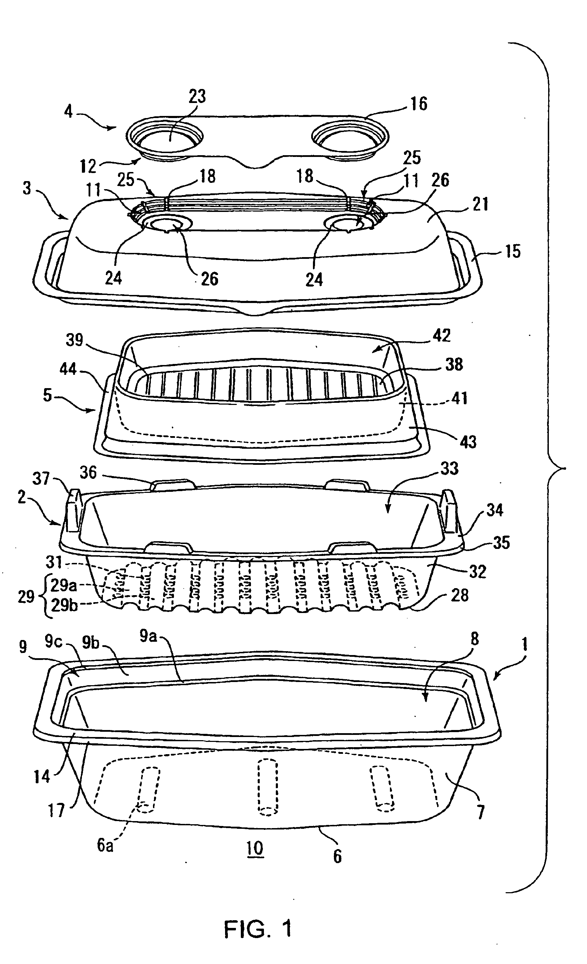

Referring to Figure 1 to 8, an embodiment of the pasta cooking system for a microwave oven of this invention is to be described.

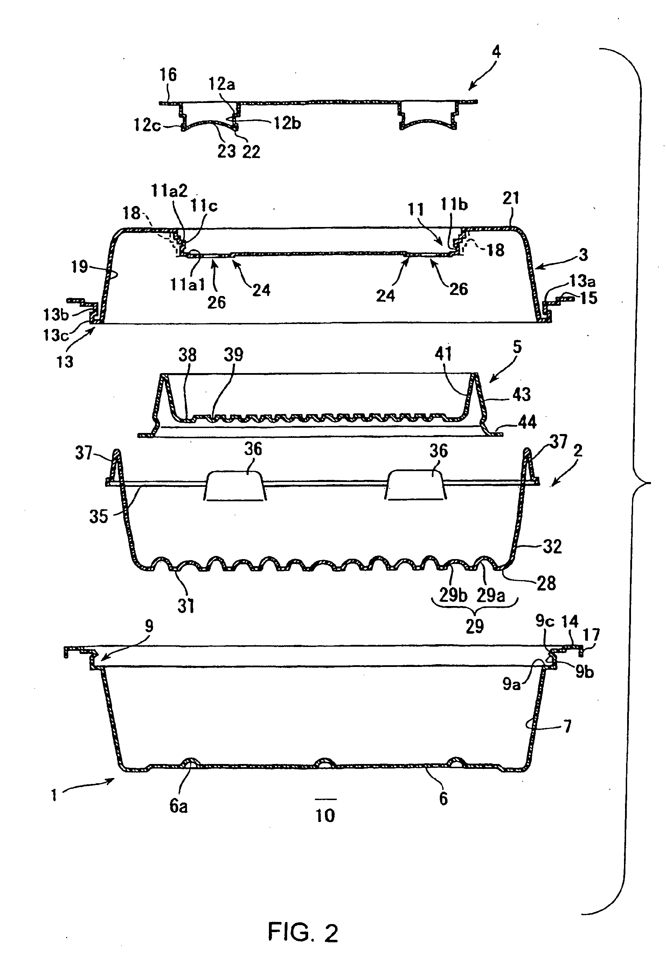

Figure 1 is an exploded perspective view of the pasta cooking system 1 of Claim 1, and Figure 2 is a corresponding cross-sectional view.

The pasta cooking system 10 comprises a container 1 for cooking water (hereinafter referred to as a "container body 1") , a container 2 for pasta (hereinafter referred to as a "pasta holder 2"), a lid 3, and a cap 4. The pasta cooking system 1 is used as a unit wherein the container body 1 with the pasta holder 2 therein and the lid 3 are joined together by way of fitting sections 9 and 13 of the container body 1 and the lid 3 respectively.

In addition, a tray 5 for pasta sauce and/or foodstuffs (hereinafter referred to as a "sauce tray 5") can be placed on the pasta holder 2, which enables simultaneous cooking of pasta, foodstuffs, and pasta sauce.

The container body 1, the pasta holder 2, the lid 3, the cap 4 , and the sauce tray 5 can be made from heat-resistant plastic sheets, for example, stretched polystyrene (OPS), heat-resistant stretched polystyrene (heat-resistant OPS), or polypropylene (heat-resistant PP) , and molded using thermal molding techniques, such as press forming or vacuum forming.

The container body 1 comprises a bottom surface 6, a peripheral wall 7 extending radially upwardly therefrom and forming an open end 8, and a fitting section 9 to engage with corresponding section 13 of the lid 3, including a tier 9a, an upper wall 9b, an annular raised rib 9. Around the edge of the fitting section 9 is a planar or slightly curved flange 14 with a skirt 17. The tier 9a has a flat surface to engage with the bottom fitting section 13 of the lid 3.

The bottom surface 6 has a few raised ribs 6a which are received by raised ridges 29 formed on the bottom surface of the pasta holder 2, locking the pasta holder within the container body 1.

Although the container body 1 shown in Figures 1 and 2 is designed to have a rectangular-ellipse shaped bottom surface 6 for cooking popular noodle-type pasta, it can be round, oval, or any other shapes.

The pasta holder 2 comprises a bottom surface 28 with a plurality of raised ridges 29 and drain holes 31, a peripheral wall 32 extending radially upwardly therefrom, forming an open end 33 around or slightly lower than the tier 9a. Around the edge of the peripheral wall 32 is a flange 34 with a skirt 35 and projections 36 for supporting the sauce tray 5.

The bottom surface 28 is preferably in the same shape as but smaller than the bottom surface 6 of the container body 1.

To enhance convection of the cooking water within the container, raised ridges 29 are formed on the bottom surface 28 of the container body 2.

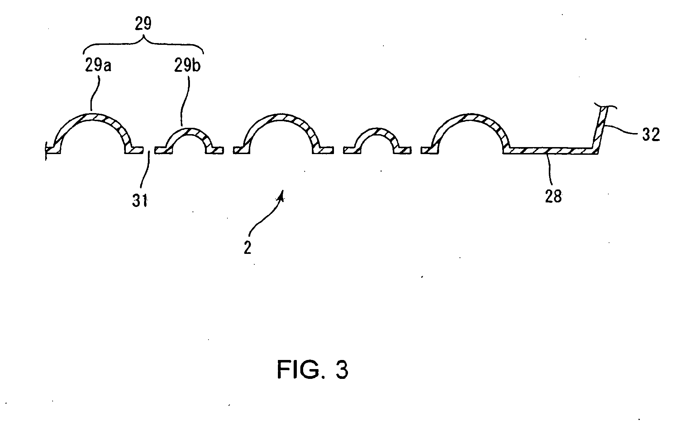

As shown in Figures 1 and 2, the raised ridges 29 are preferably formed directly in a latitudinal direction, equally spaced, and differentiated in height. Figure 3 is an enlarged sectional view of an example of the bottom surface 28 of the pasta holder 2. As illustrated in Figure 3, raised ridges 29a and 29b with different height provide irregularity to the bottom surface 28, resulting in the same effect as stirring with chopsticks. More specifically, when the pasta holder has a corrugated surface, the movement of cooking water and hence the noodles therein are enhanced due to added irregularity of convective flow, compared to convection within the container with a planar bottom surface. Accordingly, noodles are prevented from sticking to each other, even after their swelling with water absorption.

Since the irregularity of the bottom surface 28 prevents sticking of noodles, the container of this invention requires water less than half the amount necessary to cook with conventional pans. Combined with the effect of the microwave energy directly acting on the water content within the noodles, it also succeeds in shortening the cooking time to less than half. Additionally, the rate of swelling after draining is also less than half, leaving resilience in texture.

The raised ridges 29a and 29b need not be formed alternately. The bottom surface with a different configuration is supposed to exhibit an equivalent effect, therefore the only requirement in forming the bottom surface 28 is to provide irregularities.

Further, as shown in Figures 1, 2, and 3, the bottom surface 28 has a plurality of drain holes between the raised ridges 29a and 29b, or in the valleys between them. Grips 37 are formed on the flange 34 on both sides of the pasta holder 2 for pulling the pasta holder 2 out of the container body 1.

When the pasta is ready, the pasta holder 2 can be pulled out from inside the container body 1 by means of the grips 37 and cooking water is drained out from the drain holes 31, which means pasta can be taken out for immediate draining. The cooking water is left inside the container body 1, eliminating a trouble in draining anywhere without a sink.

The shape of the drain holes 31 is not limited to be round and can be in any other forms.

The sauce tray 5 comprises a bottom surface 38, an inner peripheral wall 41 extending radially upwardly therefrom with an appropriate depth, forming an open end 42, and an outer peripheral wall 43 turning outwardly and downwardly at the edge of the upper end of the inner peripheral wall 41, with a planar flange 44 on its bottom periphery which is formed for engagement with the tier 9a of the container body 1 and the projections 36 of the pasta holder 2.

Ribs 38 are formed directly in a latitudinal direction on the bottom surface 38 of the sauce tray 5, increasing structural strength of the tray.

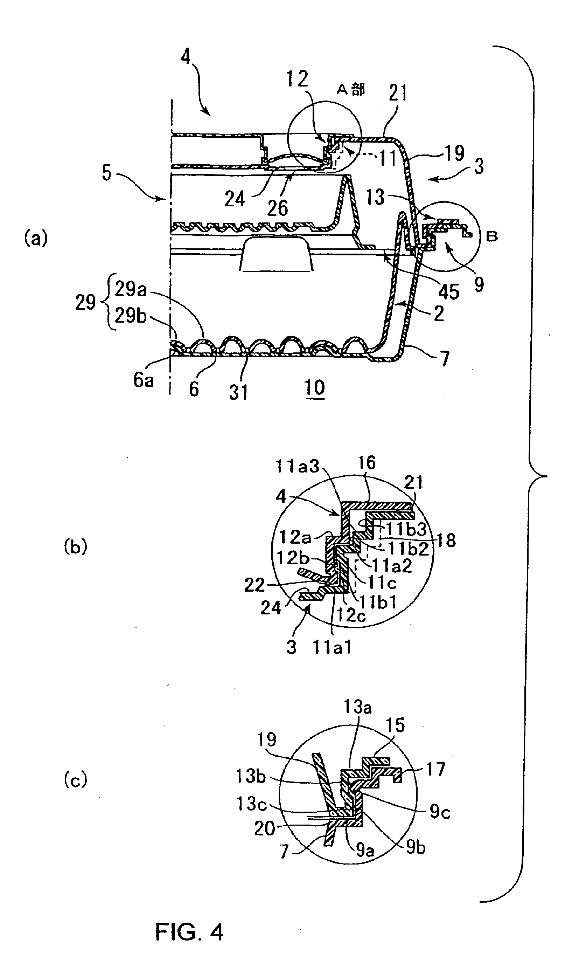

Figure 4 (a) is a sectional view of the pasta cooking system in a closed position in which the pasta holder 2 is encased within the container body 1, on which the sauce tray is placed, and the container body 1 is engaged with the lid 3 by way of the fitting sections 9 and 13. As shown in Figure 4 (a), the sauce tray has a shorter width than the pasta holder 2, creating gaps on its both sides between the side walls of the pasta holder 2 (only one side is illustrated in Figure 4 (a)) . A significant amount of moisture released during cooking pasta flows into the sauce tray 5 through the gaps 45 and steams the foodstuffs including fresh food placed on the sauce tray 5.

As a joint result of steam energy and microwave heating, foodstuffs inside the sauce tray 5 are steamed to their best condition.

The lid 3 is formed to fit into the fitting section 9 of the container body 1, comprising a top surface 21, a peripheral wall 19 extending radially downwardly therefrom and turning upwardly to form an engaging section 13c, a semi-circular recess 13b, and planar tier 13a, a lid flange 15 on its periphery, which is to be pressed into and engaged with the fitting section 9 of the container body 1.

Further, a cap 4 is molded so as to fit in an inverted elliptic cone-shaped terraced depression 25 (hereinafter referred to as a "depression 25") formed on the top surface 21 of the lid 3, while the bottom fitting section 13 of the lid 3 fits in the corresponding section 9 of the container body 1, thereby preventing water from spilling out of the container.

The lid 3 should have a height equivalent to the depth of the container body 1. A bottom surface 23 of the cap 4 is preferably convexed.

When the pasta cooking system 10 is subjected to microwave heating in the closed position with the cap 4 fit in the depression 25, the water therein starts boiling, generating steam and increasing steam pressure therein. Since the cap 4 is pressed up proportionately to the increase of steam pressure, a gap between the top surface 21 and a cap flange 16 allows steam to exit. When cooking is done, the temperature and therefore the inner pressure within the pasta cooking system 10 drops. As a result, the cap 4 re-fits in the depression 25 and hence the cap flange 16 re-seals the lid 3, tightly sealing the pasta cooking system 10.

The annular raised rib 9c is formed above the tier 9a which is formed all around the peripheral wall 7 with an appropriate surface to engage with the rim of the bottom fitting section 13 of the lid 3, and continues to the upper wall 9b and the container body flange 14 which has an inner diameter smaller than the outer diameter of the bottom opening of the lid 3 to receive it therein. The lid 3 received inside the annular raised rib 9c is supported by the tier 9a, preventing steam and boiling water from running out from the container.

The lid 3 and the cap 4, as illustrated in Figure 4, are configured so as to be capable of automatically controlling steam pressure within the pasta cooking system 10 during heating. Steam-releasing grooves 18 are formed on the terraced wall of the depression 25 with an appropriate interval in-between, extending from the bottom surface 24 up to the rim of the top surface 21 through a bottom tier 11a1, a bottom wall 11b1, an annular raised rib 11c, a middle tier 11b2, a middle wall 11b2, a top tier 11a3, and a top wall 11b3. A rim 22 of the bottom surface of the cap 4, an engaging section 12c, a wall 12b, a tier 12a, and a cap flange 16 are formed to engage with the tiers 11a1, 11a2, and 11a3, the walls 11b1 , 11b2 , and 11b3 , the annular raised rib 11c, and the top surface 21 of the lid 3, closely sealing the lid 3.

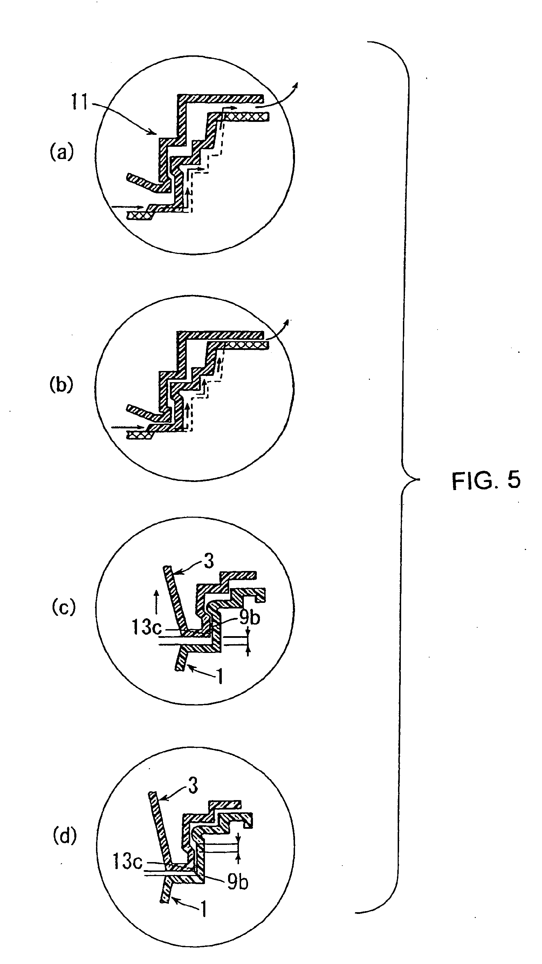

When the amount of steam generated during heating is relatively small, such configuration allows steam to run up through the steam-releasing grooves 18 and flow out through a marginal gap between the cap flange 16 and the top surface 21 as shown in Figure 5(b).

However, the amount of steam generated during heating and the associated rate of swelling can vary depending on foodstuffs placed inside the pasta cooking system 10, and the cap 4 sometimes cannot handle steam pressure by itself. For dealing with such cases, as illustrated in Figure5(c), the pasta cooking system 10 can be molded to have a gap of a few millimeters between the engaging section 13c and the upper wall 9b, so that the lid 3 can be pressed up by soaring steam pressure, temporarily relieving pressure on the cap 4.

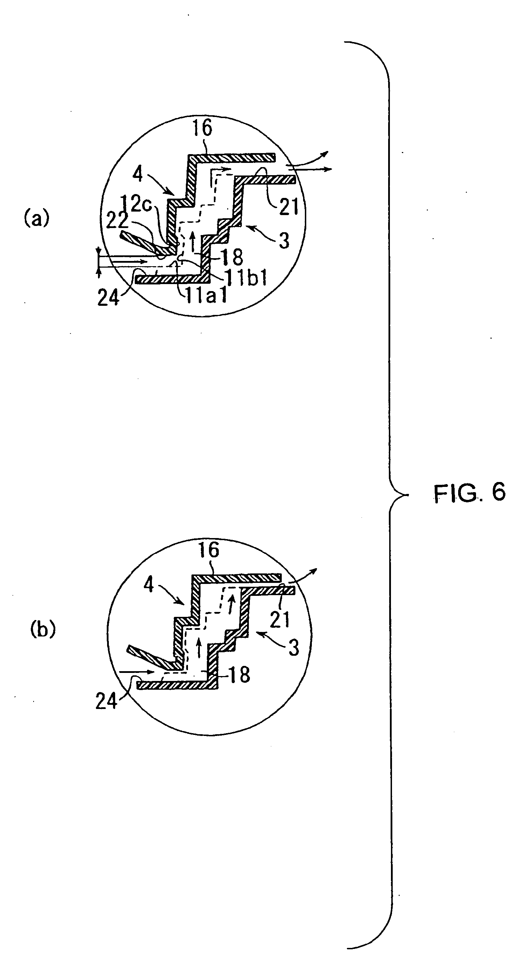

Another way to deal with a large amount of steam is, as illustrated in Figure 5 and 6, to create a gap of a few millimeters between the engaging section 12c and the top wall 11b1, allowing steam run up through an opening 26 to press up the bottom surface 23 and hence the cap 4 by a few millimeters until the engaging section 12c is blocked by the annular raised rib 11c. With this configuration, steam is allowed to exit through the gap created between the cap flange 16 and the top surface 21.

Steam-releasing grooves 18 are preferably formed on the side wall of the depression 25 with equally-spaced intervals. Although the depression 25 need not have wall 11b and can be molded only with the tier 11a, it is more desirable to form the walls 11b with appropriate height, so that the pasta cooking system 10 is closely sealed when the depression 25 is engaged with the fitting section 11. The fitting section 9 of the container body 1 has the same structure as the fitting section 11, in that the lid 3 fits in the container body 1 due to the engagement of the tier 9a, the upper wall 9b, the annular raised rib 9c, and the container body flange 14 with a lid rim 20, the engaging section 13c, the semi-circular recess 13b, and the tier 13a, and the lid flange 15, securing the container body 1 and the lid 3 in a closed position.

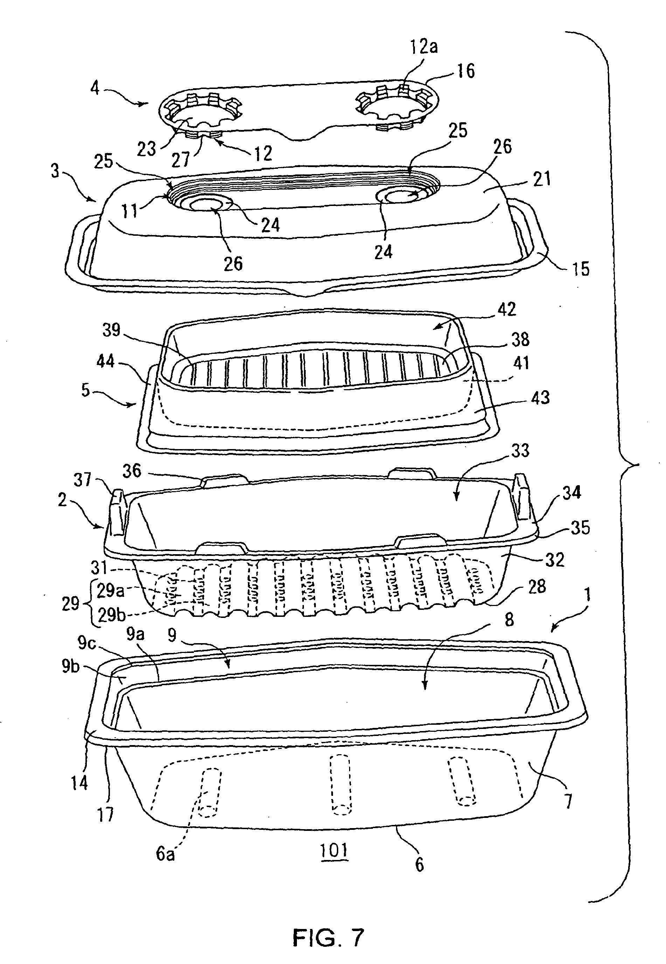

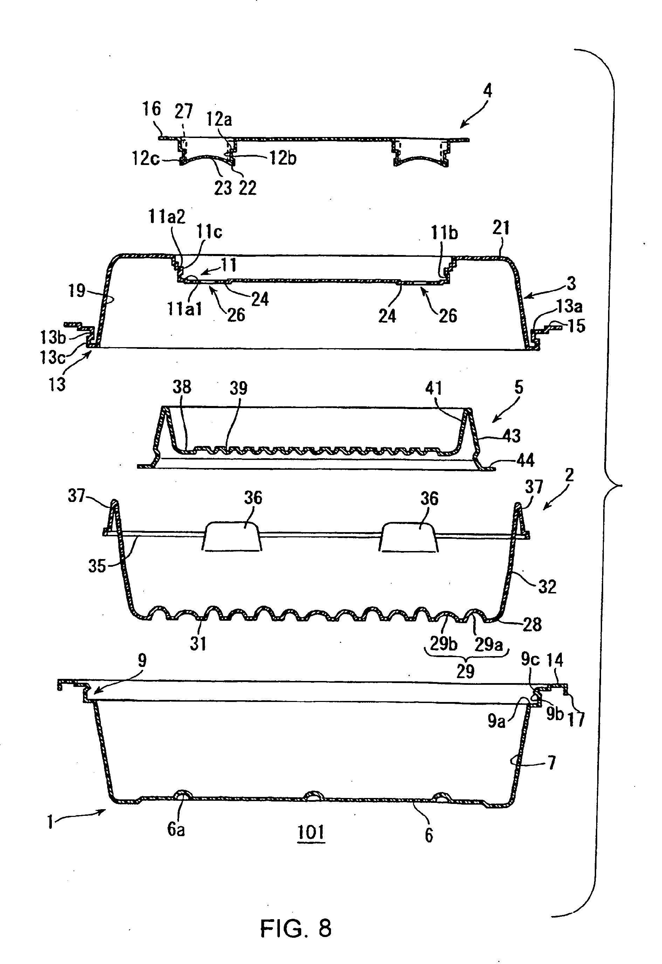

Referring to Figures 7 and 8, the second embodiment of the pasta cooking system for a microwave oven is to be described, wherein the same numbers are assigned to the same configuration as described above and no further explanation will be made. Figure 7 is an exploded perspective view of the second embodiment of the pasta cooking system, and Figure 8 is a corresponding sectional view.

The pasta cooking system 101 comprises a container body 1. a pasta holder 2, a lid 3, and a cap 4, the container body 1 having a fitting section 9 around the rim of the open end, the lid 3 having a bottom fitting section 13 around the bottom rim and a depression 25 with two openings 26 on its top surface, the cap 4 having inside depressions with a fitting section 12 and steam-releasing grooves 27. The bottom fitting section 13 of the lid 3 are molded so as to fit in the container body fitting section 9, whereas the fitting section 12 of the cap 4 are molded so as to fit in the depression 25 of the lid 3.

While steam-releasing grooves 18 are formed on the terraced side wall of the depression 25 in the pasta cooking system 10 as described above, the same are placed on the peripheral wall of the inside depressions of the cap in the pasta cooking system 101.

In addition to the beneficial effect of the first embodiment on venting steam, the pasta cooking system 101 has a further advantage in that it can be molded more easily than the pasta cooking system 10 because of its simple configuration and therefore high detachability from a mold.

The lid 3 and the cap 4 are configured so that steam pressure within the pasta cooking system 101 during heating is automatically controlled. The engaging section 12 and the steam-releasing grooves 27 are formed alternately with appropriate intervals on the peripheral wall of the inside depressions of the cap 4.

When the amount of steam generated during heating is relatively small, such configuration allows steam to run up through the steam-releasing grooves 27 and flow out through a marginal gap between the cap flange 16 and the top surface 21 of the lid 3.

However, the amount of steam generated during heating and the associated rate of swelling can vary depending on foodstuffs placed inside the pasta cooking system 101, and the cap 4 sometimes cannot handle rapidly increasing steam energy by itself. For dealing with such cases the pasta cooking system 101 can be molded to have a gap of a few millimeters between the engaging section 13c and the upper wall 9b, so that the lid 3 can be pressed up by soaring steam pressure, temporarily relieving pressure on the cap 4.

Another way to deal with a large amount of steam is to create a gap of a few millimeters between the engaging section 12c and the top wall 11b1, allowing steam run up through an opening 26 to press up the bottom surface 23 and hence the cap 4 by a few millimeters until the engaging section 12c is blocked by the annular raised rib 11c. This configuration allows steam to exit through a gap created between the cap flange 16 and the top surface 21.

A plurality of steam-releasing grooves 27 are preferably formed on the peripheral wall of the inside depression of the cap with equally-spaced intervals.

The flow of the steam and the cooking water within the pasta cooking system of this invention is to be described next, which is applicable for both of the first and second embodiments.

When the pasta cooking system 10 is subjected to microwave heating, steam pressure within the container soars, making the water, pasta sauce, and ingredients pop up therein. However, since the lid has the height equivalent to the depth of the container body 1, boiling water, pasta sauce, and ingredients, when hitting the bottom surface 23 of the cap, have become 4 or 5 degrees C. lower in temperature and then drop down into the sauce tray or the container body. Therefore they do not spill out from the container.

When heating is done, and as the inner pressure decreases, the cap 4 returns to the closed position, and the pasta cooking system 10 is resealed.

Since the lid 3 and the cap 4 fits in and is not dislocated from the container body 1 and the lid 3 respectively, the boiling water, even after the starch of pasta mixed into the cooking water and the volume thereof increased due to foams, is prevented from boiling out arid spilling around inside a microwave oven.

### EMBODIMENT

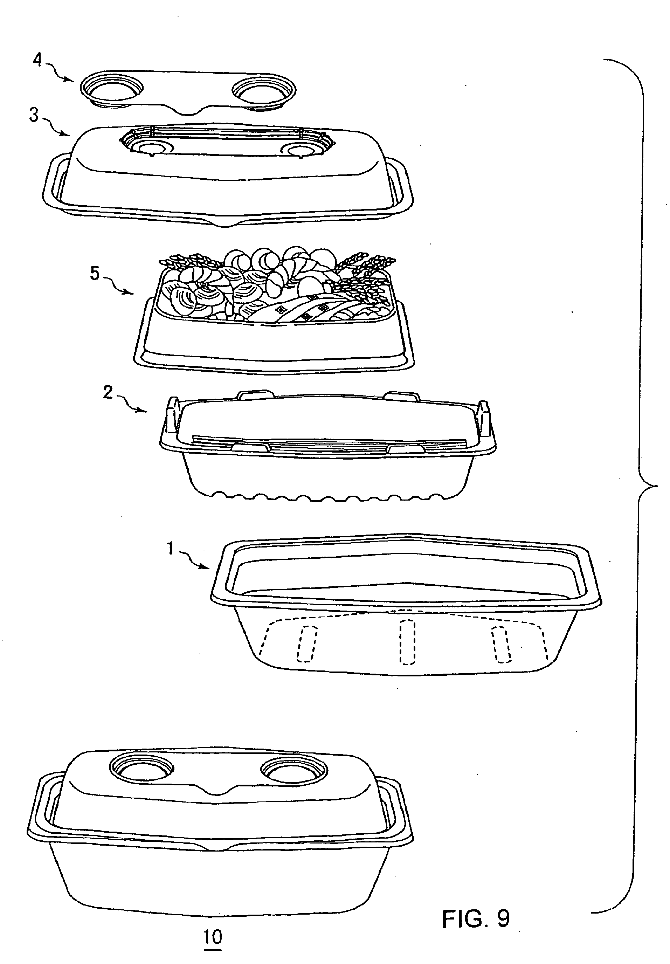

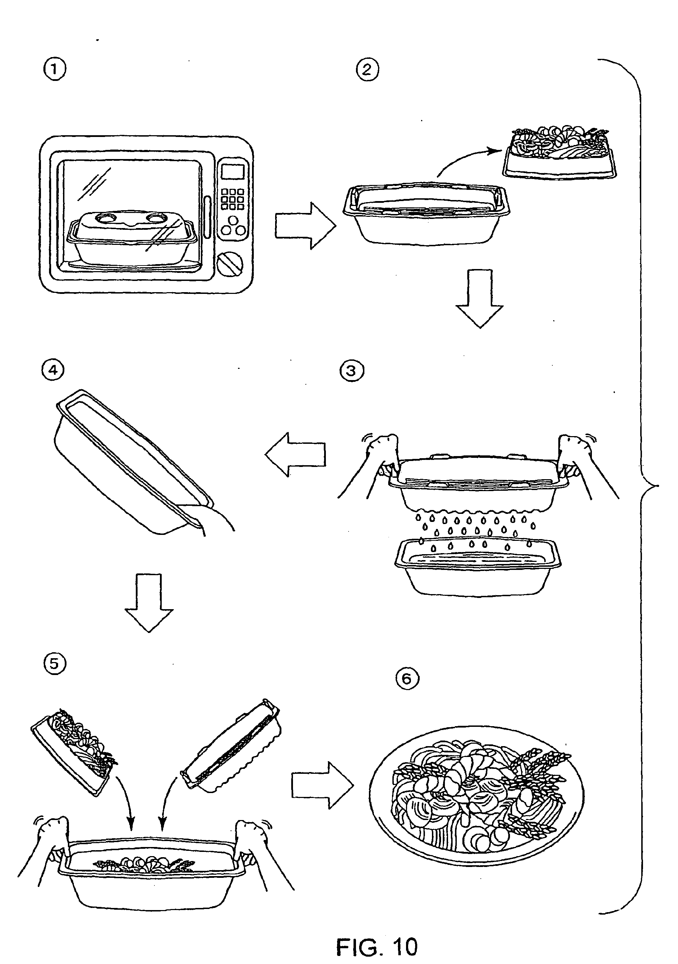

Referring to Figures 9 and 10, an embodiment of this invention is to be explained. However, it should be noted that the embodiment of the present invention is not limited to the one mentioned below.

Figure 9 is an exploded perspective view of an embodiment of the pasta cooking system of the present invention, and Figure 10 depicts cooking steps in the embodiment. The Figures 9 and 10 shows the amount of stuff for two people.

The first step is to prepare hard water, pasta, foodstuffs, and pasta sauce. The opening 26 of the cap 4 can be used to measure about 100g of pasta, an appropriate amount for one person.

Then pour 800ml (about 4 times the amount of pasta) of hard water into the container body 1, and put 200g of pasta in the pasta holder 2, foodstuffs including seafood such as fillets of white fish, shrimp, shellfish, and vegetable with pasta sauce on the sauce tray 5. The pasta holder 2 is put into the container body 1, on which the sauce tray 5 is placed, and the lid 3 is pressed inside the container body 1, then the pasta cooking system 10 is ready for microwave heating.

The pasta cooking system 10 is heated for about 10 minutes in a microwave oven. The starch within pasta mixes into the water, generating foams and increasing the volume of cooking water. However, steam pressure within the container is controlled automatically, and therefore the water does not boil out from the container. One can observe pasta dancing within the pasta holder 2 due to the raised ridges formed on the bottom surface thereof and added irregularity to convective flow of the boiling water.

Take out the pasta cooking system 10 from the microwave oven, and remove the sauce tray 5. Foodstuffs and pasta sauce has been cooked with a quantity of steam generated during cooking of pasta.

The pasta holder 2 can be pulled out from inside the container body 1, when the water drains out from the drain holes 31. The noodles do not stick to each other, resulting in an ideal resilient texture.

After discarding the cooking water and making the container body 1 empty, combine pasta with foodstuffs and pasta sauce therein. Spaghetti pescatole is ready. Cooking is done with less than half time compared to the conventional way of cooking pasta.

Although this invention proposes a cooking system especially for cooking pasta, it can also be used to cook other dried or raw noodles such as Udon, Soba, and Chinese noodles. Accordingly, embodiments of the present invention include all those possible applications.

Accordingly, the present invention is able to achieve all the conditions necessary to have ideal texture, such as the amount of water, the condition of boiling water, cooking time, and swift draining, which enables everyone to cook pasta having good flavor and texture only with a microwave oven and with a shorter period of time and simplified steps.

### INDUSTRIAL APPLICABILITY

In the present invention, the bottom surface of the pasta holder has raised ridges with valleys in-between which enhances convective flow in the boiling water, having pasta move therein. Since this configuration exhibits the same effect as stirring with chopsticks, pasta is kept from sticking to each other even after its swelling with absorption of water.

In addition, the minimum amount of water required for the container of this invention is less than half the amount necessary to cook with conventional pans. Combined with the effect of microwave energy directly acting on the water content within the noodles, cooking time is shorted to less than half. The rate of swelling after draining is also less than half, which means pasta has resilient texture.

Another feature of this invention is that the cap and/or the lid is configured so as to be pressed up as steam pressure increases within the container, which allows steam generated within the container to exit through the opening and the steam-releasing groove of the lid and/or the gap between the flanges of the container body and the lid. Therefore, the container is prevented from becoming over-pressurized and coming apart, keeping water therein from spilling out inside a microwave oven.

Further, the present invention enables swift draining upon cooking by simply pulling up the pasta holder from inside the container body, with the water drained out from the holes formed on the bottom surface of the pasta holder.

Furthermore, when the sauce tray is placed on the pasta holder with pasta sauce and foodstuffs including fresh food therein, pasta, ingredients, and pasta sauce are heated and cooked simultaneously, enabling significant reduction of cooking time and steps.

Accordingly, the present invention is capable of achieving all the conditions necessary to serve pasta with ideal texture, such as the amount of water, the condition of boiling water, cooking time, and swift draining, which enables everyone to cook an authentic pasta having good flavor and texture simply with a microwave oven and with a short period of time.

## Claims

1. A pasta cooking system (10) for a microwave oven comprising: a container body (1) having a fitting section (9) around the upper rim;
a lid (3) having a bottom fitting section (13) around its bottom rim and a depression on its top surface having an opening (26), an upper fitting section (11), and a steam-releasing groove (18),
a cap (4) having a fitting section on its peripheral wall; a pasta holder (2) being encased inside said container body (1), said fitting section (9) of the container body (1) and said bottom fitting section (13) of the lid (3) being engaged together, said upper fitting section (11) of the lid (3) and said fitting section of the cap (4) being engaged together, said opening (26) and said steam-releasing groove (18) of the lid (3) and/or a gap between said fitting section (9) of the container body (1) and said bottom fitting section (13) of the lid (3) providing a path for air and steam within the container, **characterized in that** said pasta holder (2) has a series of raised ridges (29) and drain holes (31) on the bottom surface.

2. A pasta cooking system (10) for a microwave oven comprising: a container body (1) having a fitting section (9) around the upper rim;
a lid (3) having a bottom fitting section (13) around its bottom rim and a depression on its top surface having an opening (26) and an upper fitting section (11);
a cap (4) having a fitting section and a steam-releasing groove on its peripheral wall;
a pasta holder (2) being encased inside said container body (1), said fitting section (9) of the container body (1) and said bottom fitting section (13) of the lid (3) being engaged together, said upper fitting section (11) of the lid (3) and said fitting section of the cap (4) being engaged together, said opening and said steam-releasing groove of the cap (4) and/or a gap between said fitting section (9) of the container body (1) and said bottom fitting section (13) of the lid (3) providing a path for air and steam within the container, **characterized in that** said pasta holder (2) has a series of raised ridges (29) and drain holes (31) on the bottom surface.

3. A pasta cooking system (10) for a microwave oven of Claim 1 or Claim 2, wherein said raised ridges (29) comprise two types of ridges (29a, 29b) having different height.

4. A pasta cooking system (10) for a microwave oven of either of Claim 1, 2, or 3, wherein a sauce tray (5) for placing and cooking pasta sauce and/or foodstuffs is placed on said pasta holder.

## Patentansprüche

1. Ein System zum Garen von Nudeln (10) für einen Mikrowellenherd, das Folgendes enthält:
- einen Behälterkörper (1) mit einem Passabschnitt (9) entlang des oberen Randes;
- einen Deckel (3) mit einem unteren Passabschnitt (13) entlang des unteren Randes und einer Vertiefung in der oberen Fläche, in der sich eine Öffnung (26) befindet, ein oberer Passabschnitt (11) und eine Dampfablassrille (18),
- einen Aufsatz (4) mit einem Passabschnitt an der Außenwand;
- einen Nudelbehälter (2), der eingeschlossen ist im besagten Behälterkörper (1), wobei besagten Passabschnitt (9) des Behälterkörpers (1) und besagten unteren Passabschnitt (13) des Deckels (3) ineinander liegen und besagten Passabschnitt (11) des Deckels (3) und besagten Passabschnitt des Aufsatzes (4) ineinander liegen, wobei besagte Öffnung (26) und besagte Dampfablassrille (18) des Deckels (3) bzw. ein Spalt zwischen besagtem Passabschnitt (9) des Behälterkörpers (1) und besagtem unteren Passabschnitt (13) des Deckels (3) einen Weg für Luft und Dampf in dem Behälter darstellen, **dadurch gekennzeichnet, dass** besagter Nudelbehälter (2) eine Reihe erhöhter Schwellen (29) und Ablauflöcher (31) auf der Bodenfläche aufweist.

2. Ein System zum Garen von Nudeln (10) für einen Mikrowellenherd, das Folgendes enthält:
- einen Behälterkörper (1) mit einem Passabschnitt (9) entlang des oberen Randes;
- einen Deckel (3) mit einem unteren Passabschnitt (13) entlang des unteren Randes und einer Vertiefung in der oberen Fläche, in der sich eine Öffnung (26) befindet und ein oberer Passabschnitt (11);
- einen Aufsatz (4) mit einem Passabschnitt und einer Dampfablassrille an der Außenwand;
- einen Nudelbehälter (2), der eingeschlossen ist im besagten Behälterkörper (1), wobei besagten Passabschnitt (9) des Behälterkörpers (1) und besagten unteren Passabschnitt (13) des Deckels (3) ineinander liegen und besagten oberen Passabschnitt (11) des Deckels (3) und besagten Passabschnitt des Aufsatzes (4) ineinander liegen, wobei besagte Öffnung und besagte Dampfablassrille des Aufsatzes (4) bzw. ein Spalt zwischen besagtem Passabschnitt (9) des Behälterkörpers (1) und besagtem unteren Passabschnitt (13) des Deckels (3) einen Weg für Luft und Dampf in dem Behälter darstellen, **dadurch gekennzeichnet, dass** besagter Nudelbehälter (2) eine Reihe erhöhter Schwellen (29) und Ablauflöcher (31) auf der Bodenfläche aufweist.

3. Ein System zum Garen von Nudeln (10) für einen Mikrowellenherd aus Patentanspruch 1 oder Patentanspruch 2, wobei besagte erhöhte Schwellen (29) zwei Arten von Schwellen (29a, 29b) unterschiedlicher Höhe enthalten.

4. Ein System zum Garen von Nudeln (10) für einen Mikrowellenherd aus Patentanspruch 1, 2 oder 3, in das ein Soßeneinsatz (5) zum Hineingeben und Garen von Nudelsoße bzw. Lebensmitteln auf besagten Nudelbehälter gesetzt wird.

## Revendications

1. Un système de cuisson de pâtes (10) pour four à micro-ondes, comprenant :
- un corps récipient (1) ayant une section à emboîtement (9) sur le pourtour du bord supérieur ;
- un couvercle (3), ayant une section inférieure à emboîtement (13) sur le pourtour de son bord inférieur et une dépression sur sa surface supérieure, avec une ouverture (26), une section supérieure à emboîtement (11) et une fente de sortie de la vapeur (18),
- un chapeau (4) ayant une section à emboîtement sur sa paroi périphérique ;
- un support pour pâtes (2) enfermé dans ledit corps récipient(1), ladite section à emboîtement (9) du corps récipient(1) et ladite section inférieure à emboîtement (13) du couvercle (3) étant engagées l'une dans l'autre, ladite section supérieure à emboîtement (11) du couvercle (3)et la ladite section à emboîtement du chapeau (4) étant engagées l'une dans l'autre, ladite ouverture (26) et ladite fente de sortie de la vapeur(18) du couvercle (3) et/ou un interstice entre ladite section à emboîtement (9) du corps récipient (1) et ladite section inférieure à emboîtement (13) du couvercle (3) fournissant un chemin pour l'air et la vapeur dans le récipient, **caractérisé en ce que** ledit support pour pâtes (2) a une série de stries surélevées et d'orifices de drainage (31) sur la surface du fond.

2. Un système de cuisson des pâtes (10) pour four à micro-ondes, comprenant :
- un corps récipient (1) ayant une section à emboîtement (9) sur le pourtour du bord supérieur ;
- un couvercle (3), ayant une section inférieure à emboîtement (13) sur le pourtour de son bord inférieur et une dépression sur sa surface supérieure, avec une ouverture (26) et une section supérieure à emboîtement (11) ;
- un chapeau (4) ayant une section à emboîtement et une fente de sortie de la vapeur sur sa paroi périphérique ;
- un support pour pâtes (2) enfermé dans ledit corps récipient (1), ladite section à emboîtement (9) du corps récipient (1) et ladite section inférieure à emboîtement (13) du couvercle (3) étant engagées l'une dans l'autre, ladite section supérieure à emboîtement (11) du couvercle (3) et ladite section à emboîtement du chapeau (4) étant engagées l'une dans l'autre et ladite ouverture et ladite fente de sortie de vapeur du chapeau (4) et/ou un interstice entre ladite section à emboîtement (9) du corps récipient (1) et ladite section inférieure à emboîtement (13) du couvercle (3) fournissant un chemin pour l'air et la vapeur dans le récipient, **caractérisé par le fait que** ledit support pour pâtes (2) a une série de stries surélevées (29) et d'orifices de drainage(31) sur la surface du fond.

3. Un système de cuisson des pâtes (10) pour four à micro-ondes de la revendication 1 ou revendication 2, dans lequel lesdites stries surélevées (29) comprennent deux types de stries (29a, 29b) de hauteur différente.

4. Un système de cuisson des pâtes (10) pour four à micro-ondes de soit la revendication 1, 2 ou 3, dans lequel un plateau à sauce (5) destiné à la cuisson de sauce pour pâtes et/ou de denrées alimentaires est placé sur ledit support pour pâtes.
